Europäisches Patentamt

European Patent Office

Office européen des brevets

(19)

(11) Veröffentlichungsnummer : **0 031 927**
**B1**

(12) EUROPÄISCHE PATENTSCHRIFT

(45) Veröffentlichungstag der Patentschrift :
21.11.85

(51) Int. Cl.⁴ : **G 11 B 23/04**
7

(21) Anmeldenummer : 80107895.7

(22) Anmeldetag : 13.12.80

(54) Bandkassette für streifen- oder bandförmige Aufzeichnungsträger, insbesondere Magnetbänder.

(30) Priorität : 22.12.79 DE 2951951

(43) Veröffentlichungstag der Anmeldung :
15.07.81 Patentblatt 81/28

(45) Bekanntmachung des Hinweises auf die Patenterteilung : 21.11.85 Patentblatt 85/47

(84) Benannte Vertragsstaaten :
AT BE CH DE FR GB IT LI NL SE

(56) Entgegenhaltungen :
BE-A-    836 317
US-A- 3 796 394
US-A- 3 800 322
US-A- 4 093 151

(73) Patentinhaber : BASF Aktiengesellschaft
Carl-Bosch-Strasse 38
D-6700 Ludwigshafen (DE)

(72) Erfinder : Reimer, Karl-Juergen
Dietrich-Bonhoeffer-Strasse 21
D-6710 Frankenthal (DE)
Erfinder : Pfefferkorn, Dietmar
Muehlweg 71
D-6944 Hemsbach (DE)
Erfinder : Koester, Eberhard, Dr.
Max-Sievogt-Strasse 23
D-6710 Frankenthal (DE)
Erfinder : Kreimes, Norbert
Rheinecke 14
D-6700 Ludwigshafen (DE)
Erfinder : Andriessen, Wilhelmus
Fritz-Wendel-Strasse 14
D-6706 Wachenheim (DE)
Erfinder : Wagner, Werner, Dr.
Fernacher Hoehe 22
D-7602 Oberkirch (DE)
Erfinder : Wagner, Herbert, Dr.chem
Mundenheimer Strasse 157
D-6700 Ludwigshafen (DE)

EP 0 031 927 B1

## Beschreibung

### Gebiet der Erfindung

Die Erfindung betrifft eine Bandkassette gebildet aus einem Gehäuse und einer Schutz-/Haltehülle für mindestens eine Bandrolle eines streifen- oder bandförmige Aufzeichnungsträgers, insbesondere eines Magnetbandes, worin das Gehäuse aus etwa quaderförmigen, die Bandkassetten-Außenform bildenden, zu öffnenden und schließbaren Boden- und Deckelteilen besteht und Öffnungen zum Eintritt geräteseitiger Antriebs- und Abtastorgane und zum Ineingriffkommen der Abtastorgane mit einem im Gehäuse befindlichen, zumindest auf einer Bandrolle aufgewickelten Aufzeichnungsträger mit einer Bandschlaufe sowie Führungseinrichtungen für den Aufzeichnungsträger aufweist, wobei der aufgewickelte Aufzeichnungsträger mit seiner Bandschlaufe in einer Schutz-/Haltehülle, die Boden- und Deckelseiten aufweist, zwischen denen ein zugänglicher Bandabschnitt angeordnet ist untergebracht ist, die zum Betrieb der Bandkassette in das Gehäuse einsetzbar ist und wobei Abtast- und Antriebsorgane an den Aufzeichnungsträger herantreten bzw. in die Schutz-/Haltehülle eintreten können.

### Stand der Technik zum Gegenstand der Erfindung

Es ist bekannt, Bandkassetten für bandförmige Aufzeichnungsträger wie Film und Magnetband für die Signalspeicherung in entsprechenden Aufnahme und/oder Wiedergabe-Kassettengeräten zu verwenden. Zu speichernde/gespeicherte Signale sind dabei Analog- oder Digitalsignale, die Audio-, Video-, Daten- oder Instrumentations-Information oder Kombinationen davon enthalten.

Solche Bandkassetten sind in vielfältigen Ausführungen bekannt und auf den Audio-, Video-, Daten- und Instrumentations-Kassetten-Märkten im Einsatz. Im folgenden werden einige Beispiele für derartige Kassetten kurz erläutert.

Die Kompakt-Kassette hat sich auf dem Audio-Markt weltweit durchgesetzt, es sind jedoch auch Sonderformen für die Daten- und Video-Aufzeichnung bekanntgeworden, wobei letztere jedoch aufwendig — meist in Einzelfertigung hergestellt werden.

Kompakt-Kassetten als Billigkassetten sind Gehäuse mit relativ großen Toleranzen und fehlerhaft, insbesondere im Hinblick auf die Banführungseigenschaften, hergestellt, so daß schon unabhängig von der Qualität des darin untergebrachten Magnetbandes nur eine schlechte Aufnahme/Wiedergabequalität erreichbar ist.

Es ist eine, die Form der Kompakt-Kassette besitzende sogenannte Metallrahmen-Kassette bekanntgeworden. Darin sind die üblichen Bandführungselemente, Kassetteninnenwände, Bandwickelkernlagerung und Bandführungsrollen mit großer Präzision, jedoch nur sehr aufwendig herstellbar. Als Material wurde Aluminium verwendet.

Es ist gemäß DE-PS-2 041 977 auch bekannt, die Bandführungselemente zumindest weitgehend aus der Kassette wieder in das Gerät zu verlegen, so daß die Kassette zu einem reinen Behälter für die Bandwickel wird, in den durch geeignete Öffnungen die geräteseitigen Bandführungselemente an das Band und die Bandwickel eintreten, so daß ein Bandlauf höchster Präzision weitgehend unabhängig vom Kassettengehäuse erreicht wird. Dieser Kassettentyp ist für Daten-, Video- und Audio-Signalaufzeichnungen gleichermaßen gut geeignet und außerdem in automatischen Kassettenabspielanlagen vorteilhaft einsetzbar. Bei auf dem Markt befindlichen Kassetten besteht das Gehäuse aus Kunststoffmaterial, z. B. Polystyrol, enthält jedoch Metallteile wie Bremsplatten und Bandführungsrollen und ist deshalb in der Herstellung z. Zt. nicht sehr wirtschaftlich. Mit der BE-PS-836 317 ist ein als Ladeeinrichtung bezeichneter, im wesentlichen aus einem oberen und unteren Flansch bestehender Träger für zwei Magnetbandrollen und einer dazwischen angeordneten losen Bandschlaufe bekannt, der in ein der üblichen Kompaktkassettenform entsprechendes aufklappbares Gehäuse einsetzbar ist. Nach Herumlegen der Bandschlaufe von Hand um die Bandführungselemente des Gehäuses und Schließen desselben ist ein Betrieb der damit gebildeten Magnetbandkassetten in üblichen Kassettenrekordern möglich. Mit dieser bekannten Ladeeinrichtung und dem Gehäuse sind eine Handhabbarkeit durch den Amateur, ein Schutz des Magnetbandes außerhalb des Gehäuses sowie eine Ladeerleichterung des Aufzeichnungsträgers in das Gehäuse nicht gegeben.

Mit der US-PS-3 796 394 ist ferner eine zweiteilige Kompaktkassette bekannt, wobei ein Vorderteil mit der Kassettenfrontseite, den Bandführungselementen und den beiden Bandrollen mit einem Rückteil zu der vollständigen Kassettenform ergänzt wird. Der Rückteil hat dabei lediglich eine Rahmen und Verschlußfunktion für den Vorderteil, um übliche Schweiß- oder Klebeverbindungen an den Kassettenteilen zu vermeiden und Billigmaterialien verwenden zu können. Eine Verriegelungseinrichtung am Rückteil stellt eine vorgegebene räumliche Zuordnung der Vorder- und Rückteile der zusammengesetzten Kassette sicher. Die Teile sind auch wieder voneinander lösbar.

Obwohl damit eine gewisse Austauschmöglichkeit des einen Vorderteils gegen einen anderen bei demselben Rückteil gegeben ist, wird höchstens die Qualität handelsüblicher Kompaktkassetten erreicht, da die Bandführungselemente weiterhin integrierte Teile des Kassettenvorderteils bleiben, der nach wie vor aus üblichen Kunststoffen und daher mit Toleranzen behaftet hergestellt werden soll. Eine getrennte Handhabung des Vorderteils mit den Bandspulen ist bei dieser bekannten Kassette nicht beabsichtigt und auch wegen der offenen Bauweise des Vorderteils nicht ratsam.

Mit der US-PS-4 093 151 ist ferner ein kassettenartiger, aufklappbarer Behälter bekannt mit Drehtellern für Magnetbandspulen, wobei letztere nach Öffnen des Behälters auf die Drehteller aufgelegt werden nach vorherigem Herumlegen der Bandschlaufe um die Bandführungselemente. Nach Schließen des Behälterdeckels sind die Bandspulen innerhalb des Behälters betreibbar. Auch bei diesem bekannten Behälter für Bandspulen bilden letztere keine für sich außerhalb des Behälters problemlos handhabbare Einheit.

## Aufgabenstellung der Erfindung

Ausgehend von diesem Stand der Technik auf dem Bandkassettengebiet hat sich die Erfindung die Aufgabe gestellt, eine hochwertige Bandkassette, insbesondere eine Magnetbandkassette mit hoher Präzision hinsichtlich Bandlaufeigenschaften und mit leichter Austauschmöglichkeit des Bandes durch den Amateur bereitzustellen.

## Lösungen und Vorteile der Erfindung

Die Aufgabe wird mit einer Bandkassette gebildet aus einem Gehäuse und einer Schutz-/Haltehülle gemäß Anspruch 1 gelöst.

Dadurch werden eine Präzisionsausbildung des Gehäuses sowie eine beschädigungs- und verschmutzungsfreie Ausbildung und Handhabbarkeit der Schutz-/Haltehülle und ein beschädigungsfreier und einfacher Zusammenbau von Schutz-/Haltehülle und Gehäuse zu einer hochwertigen Bandkassette erreicht.

Da die Bandführungseinrichtungen im wesentlichen ausschließlich am Gehäuse vorgesehen sind, können so extrem gute Bandlaufvoraussetzungen geschaffen werden, daß mit kleineren Kopfspaltlängen/Spurbreiten größere Aufzeichnungsdichten ohne weiteres erreichbar sind.

Mit den erfindungsgemäßen Führungs- und/oder Halteschienen an Boden- oder Deckelteilen des Gehäuses wird praktisch eine Aufnahme und/oder Führung des Schutz-/Haltehülle ermöglicht, wodurch ein leichtes Einlegen in eine vorbestimmte Position und/oder ein problemloses Einführen erreichbar ist.

Damit ergibt sich die volle Bandaustauschbarkeit, da beide Einheiten — Gehäuse und Schutz-/Haltehülle getrennte Handelsprodukte sein können. Es erschließt sich außer der Wahl zwischen verschiedenen Bandlängen, unterschiedlichen Bandeigenschaften (fotografisch oder magnetisch) auch die Möglichkeit Produkte verschiedener Hersteller optimal zu kombinieren, z. B. um besondere Audio- oder Videoeffekte zu erreichen oder besonderen Anforderungen bei der Daten- oder Instrumentationssignalspeicherung zu genügen.

Es ergibt sich für den Amateur- und Profimarkt aller Signalarten außer einer Qualitätsverbesserung bei Aufzeichnungs/Wiedergabe eine höhere Aufzeichnungsdichte — was digitale Signalkodierungen erleichtert und größere Speicherkapazitäten bereitstellt. Die Schutz-/Haltehülle ist insbesondere durch Amateure einfach handhabbar und kann zweckmäßig archivierbar sein und besteht aus geeignetem Material und hat eine geeignete Form für ausreichenden Schutz des Bandmaterials gegen äußere Beschädigungen.

Das Gehäuse ist zweckmäßig aus formstabilerem Material (Leichtmetall, Leichtemetallegierung, Polystyrol) hergestellt bei ebenfalls einfacher Handhabbarkeit, besonders im Hinblick auf den Amateur, bei hoher weitgehend unveränderlicher Präzision seiner Bandlaufeigenschaften wenn es zusammen mit einem Aufzeichnungsband innerhalb einer Schutz-/Haltehülle oder einem Aufzeichnungsband das aus einer Schutz-/Haltehülle entnommen ist, in einem Gerät betrieben wird.

Es kann das Kassettengehäuse auch aus heute handelsüblichen Geräten herausgenommenen Teilen neben einer reinen Kassettenhülle bestehen, da das Gehäuse im wesentlichen Präzisionseigenschaften besitzen soll, das jedoch vorteilhafterweise auch wirtschaftlich in Serienfertigung herstellbar sein soll.

Die Verwendung von Filmen als Bandmaterial kann außer der Filmart auch die Sensibilität des Filmmaterials wie auch ein spezieller Kontrast- oder Farbeffekt das Kriterium für einen Filmwechsel sein.

Bei Magnetband ist es möglich, außer der Bandart (Audio- oder Videoband usw.) auch die Aussteuerbarkeit oder Empfindlichkeit des Magnetmaterials oder auch die Art des Bandmaterials oder spezielle Meß- und Prüfeigenschaften von Magnetbändern zum Kriterium für einen Bandaustausch zu machen.

Im folgenden werden Detailmerkmale des Erfindungsgegenstands diskutiert.

Eine Schutz-/Haltehülle für die erfindungsgemäße Bandkassette ist wirtschaftlich aus Kunststoff und/oder Papiermaterial herstellbar, zweckmäßig im Tiefziehverfahren, im Spritzguß oder in vergleichbaren Verfahren für die Massenherstellung, z. B. im Preßverfahren. Die Form der Hülle soll ein einfaches Konfektionieren (Bestücken mit Bandmaterial) auf möglichst automatischem Wege ermöglichen.

Ein Gehäuse für die erfindungsgemäße Bandkassette ist zweckmäßig mit einer Gelenkverbindung zwischen den Boden- und Deckelteilen ausgebildet, wodurch Öffnen und Schließen des Gehäuses einfach möglich ist.

Vorteilhaft kann an den Führungs- und Halteschienen ein Teil einer Verriegelungsvorrichtung vorgesehen und ein anderer Teil an dem die Führungs- und Halteschienen nicht aufweisenden Gehäuseteil vorgesehen sein, und Betätigungselemente für die Verriegelungsvorrichtung können außen am Gehäuse zugänglich angeordnet sein.

Dadurch ist bei verriegeltem Gehäuse eine einwandfreie Funktion der Bandkassette sichergestellt.

Zweckmäßig können die Führungseinrichtungen in der Nähe der Eintrittsöffnungen für die Abtastorgane angeordnete Rippen enthalten, die sich im wesentlichen parallel zu den Führungs- und Halteschienen erstrecken.

Für die Fälle, daß die Schutz-/Haltehülle aus dem Gehäuse nach Schließen entnommen oder von einer Schmalseite des Gehäuses eingesetzt werden soll, kann zum Verschließen einer Öffnung an einer Gehäuseschmalseite eine Klappe vorgesehen sein.

In einer Ausgestaltung der Erfindung kann die Schutz-/Haltehülle aus einem Hohlkörper bestehen, der an der Frontseite in Draufsicht mindestens eine im wesentlichen gegen den Innenraum abgeschlossene Aussparung aufweist, über die der Bandabschnitt gespannt ist, und in deren Bereich die Abtastorgane in Bandkontakt und die Führungselemente in Bandeingriff bringbar sind.

Praktisch können zur guten Abdichtung des Innenraums der Schutz-/Haltehülle schlitzförmige Austrittsöffnungen für den Bandabschnitt an den Enden der Frontseite in der oder nahe der jeweils äußersten Wandung der Aussparung(en) vorgesehen und Bandführungselemente in der Nähe der Austrittsöffnungen angeordnet sein.

In einer vorteilhaften Ausführung können Führungsschlitze entlang von Querachsen des Hohlkörpers vorgesehen sein, zum Eingriff von Führungselementen des Gehäuses.

Es können auch weitere Führungsschlitze zum Trennen des Hohlkörpers von den Rollenkernen entlang der Querachsen des Hohlkörpers vorgesehen sein, die von der Frontseite zu den Rollenkernen hinführen.

Damit wird ein zumindest teilweises Trennen der Schutz-/Haltehülle vom Gehäuse und gegebenenfalls von den Bandrollen ermöglicht, was im Interesse einer Präzisions-Bandkassette notwendig sein kann.

Es kann auch praktisch günstig sein, daß im Hohlkörper Bandspannstifte vorgesehen sind, die mittels durch Schlitze hindurchgreifender Gehäuseteile in eine zur Bandspannung unwirksame Lage bringbar sind.

Beispiele für Lösungen nach der Erfindung

Ausführungsbeispiele von Bandkassettensystemen sind im folgenden beschrieben und in der Zeichnung dargestellt.

Es zeigen

Figur 1A eine erste Schutz-/Haltehülle für zwei Bandwickel

Figur 1B die Schutz-/Haltehülle nach Figur 1A teilweise eingesetzt in ein Gehäuse mit der Außenform einer Kompakt-Kassette

Figur 1C die Außenansicht des geschlossenen Gehäuses mit eingesetzten Bandwickeln

Figur 2A eine zweite Schutz-/Haltehülle für zwei Bandwickeln

Figur 2B eine Ansicht eines Schnitteils der Schutz-/Haltehülle nach Fig. 2A

Figur 2C die Schutz-/Haltehülle nach Fig. 2A teilweise eingesetzt in ein Gehäuse einer Bandkassette

Figur 3 eine dritte Schutz-/Haltehülle für zwei Bandwickel

Figur 3A eine Schnittansicht durch einen Eckteil der Hülle der Fig. 3A

Figur 3B eine Einzelheit, Vertikalgelenk der Fig. 3B

Figur 3C das geschlossene Gehäuse der Fig. 3B mit der eingesetzten Schutzhülle von rückwärts gesehen

Figur 4 eine geöffnete Schachtel als Schutz-/Haltehülle und ein Spulenpaar dafür.

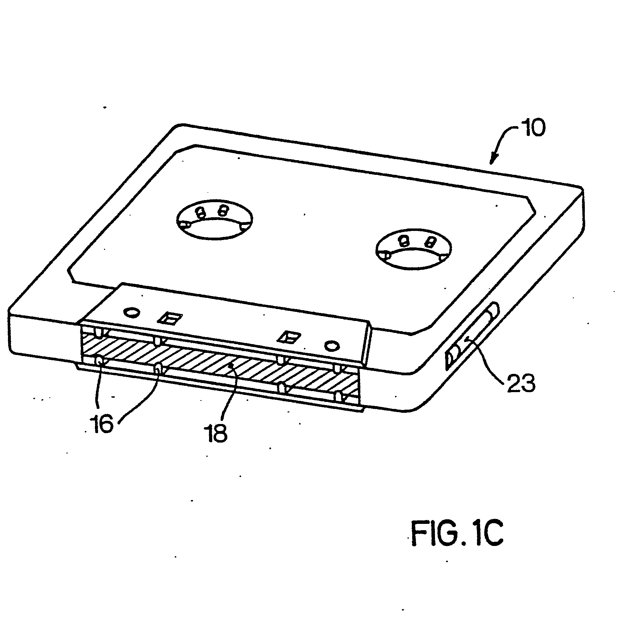

Figur 1C zeigt eine perspektivische Ansicht einer Kompaktkassette, die ihren Abmessungen nach der DIN-Norm 45 516 entsprechen und dieselben Funktionen wie eine übliche Komptakt-Kassette erfüllen soll.

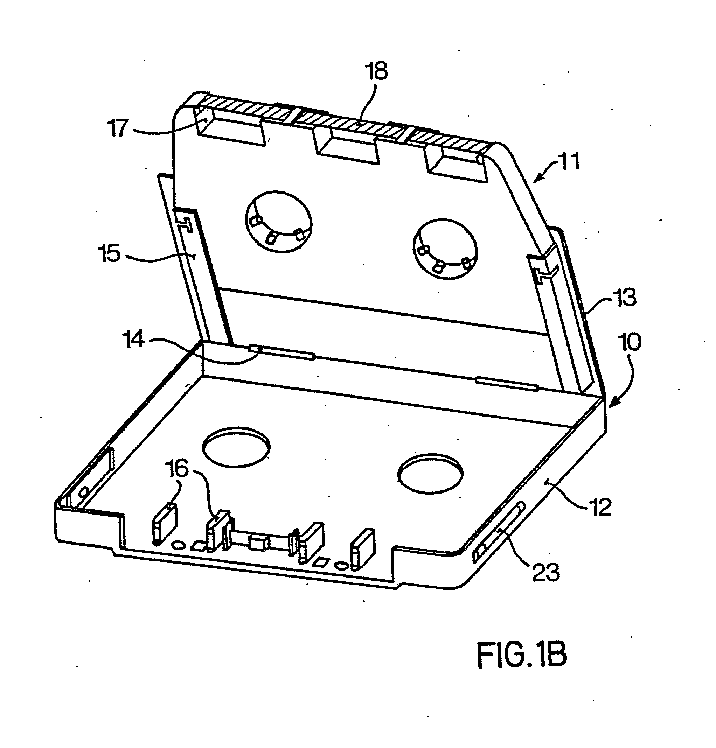

Unterschiedlich zu üblichen Kompakt-Kassetten ist jedoch, daß das Gehäuse 10 ein Präzisionsgehäuse ist, das zur Aufnahme einer Schutz-/Haltehülle 11 (« Hülle ») (Fig. 1B) mit zwei Bandrollen oder -wickeln eingerichtet ist.

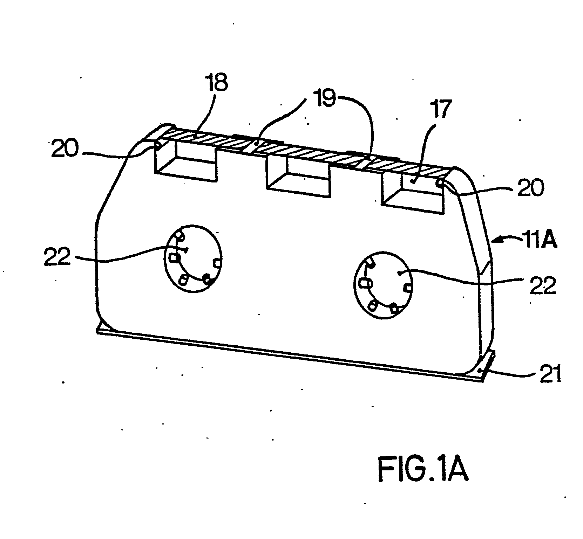

Das Gehäuse 10 (Fig. 1C bzw. 1B) besteht vorzugsweise aus einem Material, das serienmäßig verarbeitbar ist und formstabil auch in breiten Temperaturbereichen bleibt. Das Gehäuse 10 besteht aus zwei Teilen, dem Bodenteil 12 und dem Deckelteil 13, die hier bewegbar über ein Gelenk 14 miteinander verbunden sind. Die Gelenke 14 sind an der Rückwand des kastenartigen Bodenteils 12 sowie am Rand des flachen Deckelteils 13 befestigt. In die Aufnahme- und Führungsschienen 15 an der Deckelunterseite teilweise eingeschoben ist eine Ausführung der Hülle 11 dargestellt. Nach erfolgtem Einschieben der Hülle 11 und Zuklappen des Deckelteils 13 treten Bandführungsrollen oder Zapfen 16 in die Aussparungen 17 der Hülle 11 ein, über die das Band 18 mittels Haltestiften 19 gespannt ist. Am Ende der rechts und links außen gelegenen Aussparungen 17 sind Zapfen oder Rollen 20 an der Hülle 11 und 11A vorgesehen. Zweckmäßig ist die Hülle 11 von diesen Stellen abgeschlossen ausgebildet, wie in Figur 1A dargestellt zum Schutz vor Staub und Schmutz.

Die Größe und Form der Hülle 11 ist hier z. B. durch den maximalen Bandwickeldurchmesser bestimmt, wenn die Hülle beim Betrieb mit dem Gehäuse 10, in diesem befindlich bleiben soll. Für diesen Fall kann die Hülle 11 einstückig oder aus zwei fest miteinander verbundenen Teilen aus geeignetem Material hergestellt sein.

Wenn die Hülle 11 jedoch nach Einlegen in das Gehäuse 10 teilweise oder völlig entfernt werden soll — z. B. um nachteilige Einflüsse auf die Bandführung von vornherein zu vermeiden — kann die Größe der Hüllenform auch durch den Durchmesser des halbvollen Bandwickels bestimmt sein. In diesem Fall ist mindestens eine Hälfte der Hülle abnehmbar ausgebildet, und beide Hüllenhälften können schachtelartig zusammensteckbar ausgebildet sein. Die Bandwickelhülle 11A in Fig. 1A kann mit einem z. B. lösbar anbringbaren Buchrückenteil 21 ausgebildet sein, dessen Länge der Hüllenlänge entspricht, so daß ein Aufstellen ermöglicht wird. Der Buchrücken kann beschriftbar für Archivierzwecke sein.

In einem Ausführungsbeispiel kann die Hülle 11, 11A aus zwei Teilen bestehen, die zur Mittelebene der Hülle 11 symmetrisch oder unsymmetrisch ausgebildet sein können, wobei die symmetrische Form die Herstellung in Serie stark erleichtert. Die Hülle 11, 11a besteht zweckmäßigerweise aus Kunststoff, z. B. aus Folienmaterial aus Polystyrol, Polyäthylen, vorzugsweise Hart-PVC (Polyvinylchlorid) ggfs. in Verbindung mit Papier- oder Kartonmaterial, wobei die Teile in geeigneter Weise z. B. durch Schweißen verbunden sein können. Die Haltestifte 19 und/oder Zapfen oder Achsen für Bandrollen 20 können entweder an einem der Hüllenteile geeignet angebracht werden, z. B. durch Einschießen. Stifte 19, Zapfen und Rollen 20 sollten aus antimagnetischem und statisch möglichst nicht aufladbarem Material bestehen. Beim Aufzeichnungs- und Wiedergabevorgang werden ein oder mehrere Magnetköpfe gegen die freien Bandabschnitte über den Aussparungen 17 angedrückt, wobei die Andruckkraft den Umschlingungswickel am Kopf bestimmt. Dabei befindet sich die Hülle 11, 11a bereits in dem Gehäuse 10. Der Antrieb der Bandwickel innerhalb der Hülle 11 oder teilweise oder völlig ohne Hülle 11 erfolgt über geräteseitige Antriebsspindeln, die in die Öffnungen 22 der Bandwickelkerne eintreten.

In Figuren 1B und 1C sind an einer Schmalseite des Gehäuses Betätigungsknöpfe 23 für eine Verriegelungseinrichtung für die Deckel- und Bodenteile 12 und 13 erkennbar. Die Verriegelungseinrichtung ist in weiteren Figuren genauer erkennbar und weiter unten erläutert.

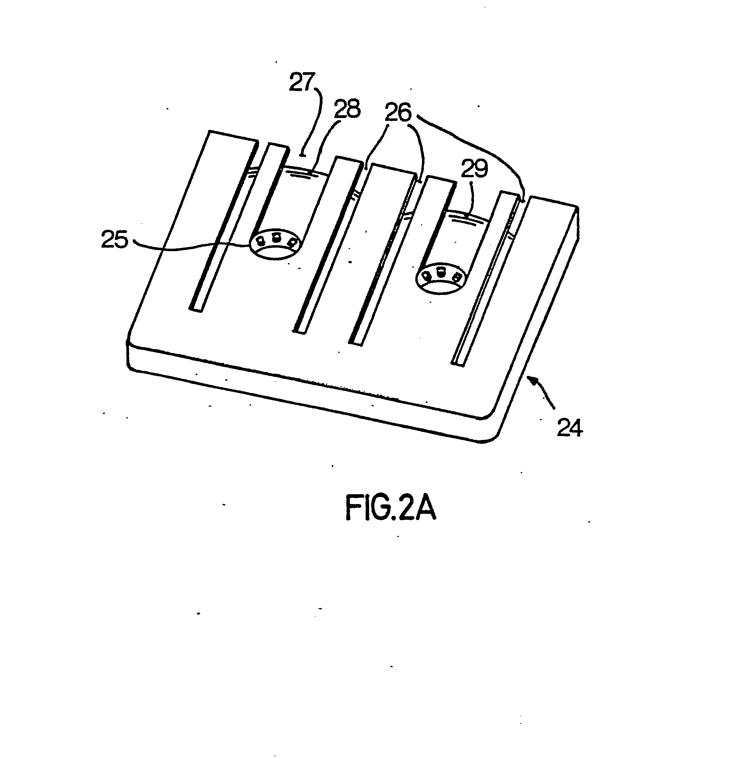

Fig. 2A bis 2C zeigen eine weitere Ausgestaltung einer Hülle, Bandwickelhülle 24, die aus vorstehend aufgeführten Materialien in Serienherstellung, z. B. durch Tiefziehen günstig herstellbar sein soll und die Bandwickel vor Staub oder anderen mechanischen Beschädigungen schützen soll. Bei der Herstellung werden ringförmige Einbuchtungen 25 mit angeformt, die in die Mitnehmeröffnungen 22 der Wickelkerne eingreifen und die Bandwickel so in der Horizontalebene fixieren. Es ist weiterhin möglich, Schlitze 26 und 27 quer in der Hülle 24 vorzusehen, die mit Führungselementen im Gehäuse 32 beim Einschieben und Herausnehmen zusammenwirken können.

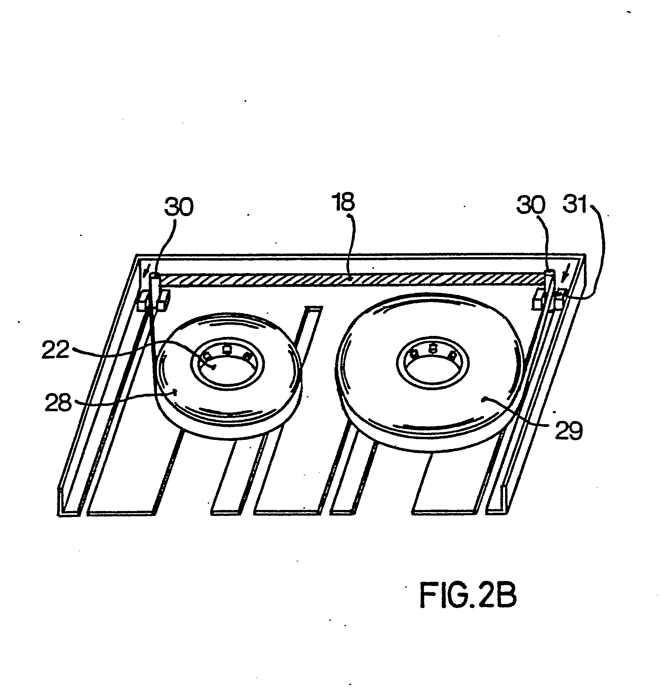

Beim Herstellen und Konfektionieren der Hülle 24 können die Bandwickel 28 und 29 in die offene Seite der Hülle 24 eingeschoben werden bis die Wickelkerne an den Einbuchtungen 25 fixiert und zentriert werden. Das Band 18 kann dann über Bandspannstifte oder -rollen 30 gelegt werden, die aus der gezeigten senkrechten Stellung in eine waagrechte Lage schwenkbar oder besser gegen Federkraft umklappbar ausgebildet sind. Die Schwenklager sind als Blöcke 31 für eine nicht dargestellte Schwenkachse in Fig. 2B gezeigt. Nach dem Überlegen des Bandes 18 über die Bandspannstiffte 30 kann das Hüllenunterteil gemäß Fig. 2B durch Aufsetzen eines Oberteils oder durch geeignetes anderartiges Verbinden mit einem Oberteil vervollständigt werden und ist komplett zur Benutzung mit einem Gehäuse 32, das geringfügige Abweichungen vom Gehäuse 10 in Fig. 1B aufweist.

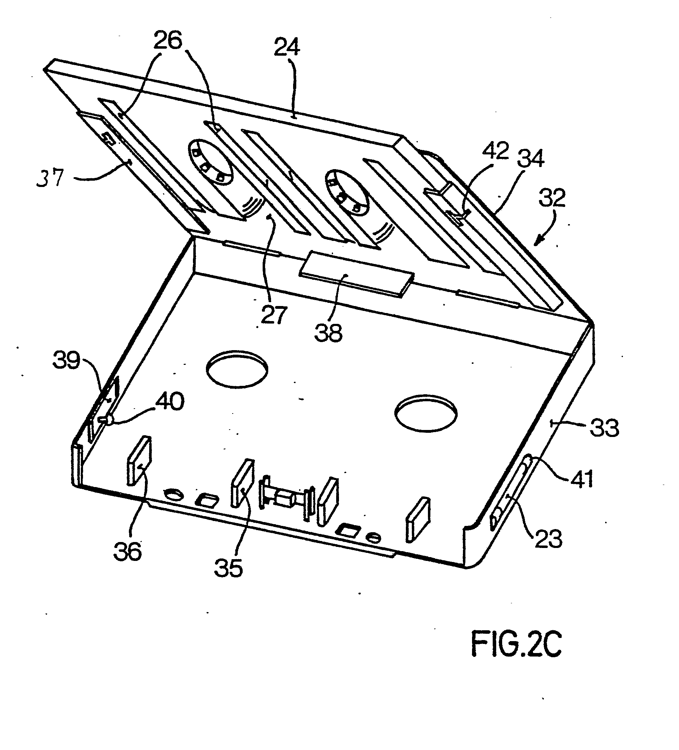

Das Gehäuse 32 ist aus geeignetem thermisch und mechanisch stabilem Material herstellbar, z. B. aus Metall, einer Metallegierung, einem Kunststoffmaterial ggfs. glasfaserverstärkt, oder kombiniert aus Kunststoffteilen und Metallteilen. Zweckmäßig besteht das Gehäuse 32 aus zwei Teilen 33 und 34, die wie Teile 12 und 13 des Gehäuses 10 über ein Horizontalgelenk miteinander verbunden sind, so daß ein Schwenken des Deckelteils 34 in einer Vertikalebene ermöglicht wird. Unterschiedlich zum Gehäuse 10 sind Führungsrippen 35 und 36, deren Länge von der Maximalgröße der Wickel abhängt, und deren Höhe von der Innenhöhe des Gehäuses 32 bestimmt wird. Die Hülle 24 ist in noch nicht völlig eingeschobener Lage in Führungsschienen 37 am Deckelteil 34 in Fig. 2C dargestellt. Ist der Einschiebevorgang bis zum Anschlag 38 erfolgt und der Deckelteil 34 heruntergeschwenkt, so treten die Rippen 35 und 36 in die Schlitze 26 der Hülle 24 ein und ermöglichen somit ein sehr genaues Ausrichten der Hülle 24 im Gehäuse 32. Die Rippen 36 tauchen beim Schließen des Deckelteils 34 in die außenliegenden Schlitze 26 und betätigen die Bandspannstifte 30, so daß diese umklappen (Pfeilrichtung in Fig. 2B ist Umklapprichtung). Über einen nicht dargestellten Fortsatz an der Hülle oder einen über das Format des Gehäuses 32 herausragenden Hüllenteil ist eine Entnahme der Hülle 24 aus dem Gehäuse 32 möglich.

Zum Zwecke der Herausnahme der Hülle 24 nach vorn ist die Frontseite des Gehäuses 32 gegenüber derjenigen des Gehäuses 10 mit einer verlängerten Öffnung ausgebildet, wie es an den stark verkürzten Wandteilen erkennbar ist.

Es wird an dieser Stelle darauf aufmerksam gemacht, daß im Gegensatz zur Ausführung der Figuren 1A bis 1C hier die Hülle 24 mit der offenen Seite in die Führungsschienen 37 eingeführt wird, so daß sie beim Herausziehen aus der Vorderseite des Gehäuses 32 heraustritt. Funktionsmäßig wird bei vorliegenden Ausführung erreicht, daß beim Zuklappen das Magnetband 18 ohne Schwierigkeiten über die Bandführungselemente, hier Rippen 35 und 36, die jedoch auch Rollen umfassen können, gelegt wird. Die klappbaren Spannstifte 30 müssen deshalb geeignet angeordnet sein. Nach dem Umklappen der Spannstifte 30 kommt das Band 18 frei von der Hülle 24 und wird, ggfs. vorübergehend, Teil des Gehäuses 32, mit dem ein hochgenauer Betrieb auf einem üblichen Kassettengerät durchführbar wird. Nach Betrieb ist es außerdem einfach möglich, die Hülle 24 wieder in das Gehäuse 32 einzusetzen und das Band 18 und die Bandwickel 28 und 29 zu befreien und aus dem Gehäuse 32 zu entnehmen. Bei diesem Entnahmevorgang sind die Spannstifte oder -rollen 30 wieder senkrecht gestellt, so daß sie das Band 18 von den Bandführungselementen des Gehäuses 32 abheben können.

Im einzelnen läuft der Entnahmevorgang wie folgt ab :

In das Gehäuse 32 wird die Hülle 24, die Führungsschlitze 26 und 27 dem Bodenteil 33 zugewandt, mit der offenen Seite zuerst eingeschoben bis der Anschlag 38 erreicht wird. Die Bandwickel 28 und 29 schieben sich dabei in die Hülle 24 und werden durch Einrasten der Wickelkerne an den Einbuchtungen 25 fixiert. Zu diesem Zeitpunkt ist auch das Band 18 bereits an den Spannstiften 30 befindlich. Nach Betätigen des Verriegelungsmechanismus wird das Gehäuse 32 geöffnet und die Hülle 24 ist, ggfs. zu Archivierzwecken, entnehmbar.

Außer den Einbuchtungen 25 können auch weitere Wandteile der Hülle 24 zum Kontakt mit den Wickelkernen und Bandwickeln vorgesehen sein, so kann z. B. eine Einwölbung der großen Hüllenwände in Richtung auf die Bandwickel 28 und 29 vorgesehen sein, wie dies z. B. bei Kompakt-Kassetten durch Beilagefolien auch erreichbar ist. In praktischer Ausführung ist es selbstverständlich auch möglich, die Schlitze 26 und 27 aus Schutzgründen für das Band als Prägenuten auszubilden, die in den Innenraum hineinragen und funktionsmäßig als Sicken die Wickelkerne und die Bandwickel führen. Solche Prägenuten 26 müßten nur im Bereich der Spannstifte 30 Durchbrechungen haben, damit durch Eintritt von Geräteteilen das Stiftumklappen erreicht werden kann. Grundsätzlich können die Schlitze oder Nuten auch durch nebeneinanderliegende, erhaben ausgebildete Rippen auf der Hüllenaußenseite ersetzt sein, wobei Durchbrechungen gleichfalls erforderlich wären.

Als Verriegelungseinrichtungen am Gehäuse 32 sind in Fig. 2C folgende erkennbar : Mindestens ein beweglicher Federteil 39 ist einseitig befestigt, trägt einen nach innen ragenden Kopfteil 40 und eine durch einen Seitenschlitz 41 in der Gehäusewand von außen per Finger zugänglichen Betätigungstaste 23. In einer oder beiden Führungsschienen 37 ist ein Ausschnitt 42 zur Aufnahme des Kopfteils 40 vorgesehen.

Ein Eindrücken eines oder beider Tasten 23 von außen bewegt den Federteil 39 nach innen und gestattet danach ein Einrasten des Kopfteils 40 in den Ausschnitt 42. Die Verriegelung erfolgt mit Loslassen der Tasten 23. Die Entriegelung erfolgt durch Trennen des Kopfteils 40 aus dem Ausschnitt 42.

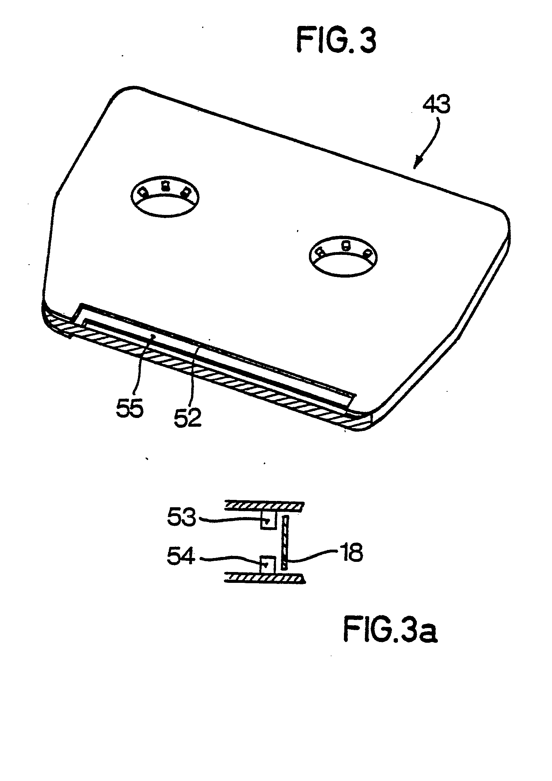

Eine dritte Ausführung einer Hülle ist mit 43 bezeichnet (Fig. 3) und dient zum Betrieb mit einem geeigneten, nicht gezeigten Gehäuse.

In den Eckbereichen der Hülle 43 sind Halteelemente für das Band 18 vorgesehen, damit es nicht in den Innenraum der Hülle 43 hineinrutschen kann, wonach nur noch ein umständliches Einsetzen in das Gehäuse möglich wäre. Die Halteelemente müssen vielmehr im Hinblick auf die Entnahme der Hülle 43 aus dem Gehäuse so ausgebildet und angeordnet sein, daß das Band 18 durch zweckmäßig an Unter- und Oberteil angebrachten Haltezapfenstümpfen 53 und 54 hindurchrutschen kann. Ein Wiedereinsetzen der Bandwickel in die Hülle 43 kann hier nur nach Öffnen des Gehäuses Einschieben des Hüllenunterteils und Aufsetzen des Hüllenoberteils erfolgen.

Die Hülle 43 ist zweckmäßig an drei Seiten geschlossen ausgebildet und die Bandwickel treten durch die Öffnung 55, die an den Ausschnitt 52 angrenzt, aus der Hülle 43 heraus. Zweckmäßig ist die Hülle 43 schachtelartig z. B. symmetrisch in ihrer Mittelebene teilbar ausgebildet.

Es ist grundsätzlich auch möglich, eines der Hüllenteile im Gehäuse oder Gerät zu lassen und nur das andere Hüllenteil zu entfernen. In diesem Fall muß der im Gehäuse oder Gerät bleibende Hüllenteil Durchtrittsöffnungen für entsprechende Führungs- und Antriebselemente enthalten. Um dann auch Staubsicherheit bei geschlossener Hülle zu erreichen, sind die Öffnungen geeignet abzudecken.

Die Hülle ist vorteilhaft als einfachstes Tiefziehteil, z. B. nach Art eines Blister-Verpackungs-Hohlkörpers, aus geeignetem Kunststoffmaterial herstellbar.

**Patentansprüche**

1. Bandkassette gebildet aus Gehäuse und Schutz-/Haltehülle für mindestens eine Bandrolle eines streifen- oder bandförmigen Aufzeichnungsträgers, insbesondere eines Magnetbandes, worin das Gehäuse (10, 32) aus etwa quaderförmigen aus die Bandkassetten-Außenform bildenden, zu öffnenden und schließbaren Boden- und Deckelteilen besteht, und Öffnungen zum Eintritt geräteseitiger Antriebs- und Abtastorgane und zum Ineingriffkommen der Abtastorgane mit dem im Gehäuse befindlichen, zumindest auf einer Bandrolle aufgewickelten Aufzeichnungsträger (18) mit einer Bandschlaufe sowie Führungseinrichtungen (16, 35) für den Aufzeichnungsträger aufweist, wobei der aufgewickelte Aufzeichnungsträger mit seiner Bandschlaufe in einer Schutz-/Haltehülle, 11 11A, 24, 43, die Boden- und Deckelseiten aufweist, zwischen denen ein zugänglicher Bandabschnitt angeordnet ist, untergebracht ist, die zum Betrieb der Bandkassette in das Gehäuse (10, 32) einsetzbar ist und wobei Abtast und Antriebsorgane an den Aufzeichnungsträger herantreten bzw. in die Schutz-/Haltehülle eintreten können, dadurch gekennzeichnet, daß die Schutz-/Haltehülle (11, 11A, 24, 43) für den Aufzeichnungsträger (18) auf wenigstens drei Umrißseiten sowie an Boden- und Deckelseiten im wesentlichen geschlossen ausgebildet ist, daß Führungs- und/oder Halteschienen (15, 37) am Boden- und/oder Deckelteil (13 u. 34) des Gehäuses (10 bzw. 32) vorgesehen sind, worin die Schutz-/Haltehülle (11, 11A, 24, 43) bei geöffnetem Gehäuse (10, 32) einsetzbar ist bzw. woraus sie entnehmbar ist, und daß beim Schließen des Gehäuses (10, 32) die Führungseinrichtungen (16, 35) selbsttätig an den Bandabschnitt treten für den Betrieb des Aufzeichnungsträgers (18) im Gehäuse (10, 32).

2. Gehäuse einer Bandkassette nach Anspruch 1, dadurch gekennzeichnet, daß zwischen den Boden- und Deckelteilen (12 u. 13 bzw. 33 u. 34) eine Gelenkverbindung (14) vorgesehen ist.

3. Gehäuse nach Anspruch 2, dadurch gekennzeichnet, daß an den Führungs- und Halteschienen (15, 37) ein Teil (42) einer Verriegelungsvorrichtung vorgesehen ist und ein anderer Teil (39, 40) an dem die Führungs- und Halteschienen (15, 37) nicht aufweisenden Gehäuseteil vorgesehen ist und Betätigungselemente (23) für die Verriegelungsvorrichtung außen am Gehäuse zugänglich angeordnet sind.

4. Gehäuse nach einem der Ansprüche 2 und 3, dadurch gekennzeichnet, daß die Führungseinrichtungen in der Nähe der Eintrittsöffnungen (17, 26) für die Abtastorgane angeordnete Rippen (16, 35, 36) enthalten, die sich im wesentlichen parallel zu den Führungs- und Halteschienen (15, 37) erstrecken.

5. Gehäuse nach einem der Ansprüche 2 bis 4, dadurch gekennzeichnet, daß eine zum Verschließen einer Öffnung zum Einführen/zur Entnahme der Schutz-/Haltehülle (43) dienenden Klappe (50) an einer Gehäuseschmalseite ausgebildet ist.

6. Schutz-/Haltehülle einer Bandkassette nach Anspruch 1, gekennzeichnet durch einen Hohlkörper, der an der Frontseite in Draufsicht mindestens eine im wesentlichen gegen den In-nenraum abgeschlossene Aussparung (17) aufweist, über die der Bandabschnitt gespannt ist und in deren Bereich die Abtastorgane in Bandkontakt und die Führungselemente in Bandeingriff bringbar sind.

7. Schutz-/Haltehülle nach Anspruch 6, da-durch gekennzeichnet, daß schlitzförmige Aus-trittsöffnungen für den Bandabschnitt an den Enden der Frontseite in der oder nahe der jeweils äußersten Wandung der Aussparung(en) vorgesehen sind und Bandführungselemente (20, 53 und 54) in der Nähe der Austrittsöffnungen angeordnet sind.

8. Schutz-/Haltehülle nach Anspruch 6, dadurch gekennzeichnet daß Führungsschlitze (26) entlang Querachsen des Hohlkörpers vorgesehen sind, zum Eingriff von Führungselementen (35, 36) des Gehäuses (32).

9. Schutz-/Haltehülle nach Anspruch 6 oder 8, dadurch gekennzeichnet, daß weitere Führungsschlitze (27) zum Trennen des Hohlkörpers von den Rollenkernen entlang der Querachsen des Hohlkörpers vorgesehen sind, die von der Frontseite zu den Rollenkernen hinführen.

10. Schutz-/Haltehülle nach Anspruch 8 oder 9, dadurch gekennzeichnet, daß im Hohlkörper Bandspannstifte (30) vorgesehen sind, die mittels durch Schlitze (26) hindurchgreifender Gehäuseteile (36) in eine zur Bandspannung umwirksame Lage bringbar sind.

**Claims**

1. A cassette comprising a housing and a protective holder for at least one roll of a recording medium in strip or tape form, particularly a magnetic tape, which housing (10, 32) consists of approximately rectangular bottom and lid parts which can be opened and closed and form the outer shape of the cassette ; has openings serving to admit drive members and scanning means on the transport apparatus, the scanning means cooperating with the recording medium (18) which is located inside the housing, is wound into at least one roll, and has a looped portion ; and also has guide means (16, 35) for the recording medium, the roll of recording medium with its looped portion being accommodated in a protective holder (11, 11A, 24, 43) that has top and bottom walls between which an accessible section of recording medium is arranged, and that can be inserted into the housing (10, 32) for operation of the cassette, and it being possible for the drive members and scanning means to make contact with the recording medium or to enter the protective holder, wherein the protective holder (11, 11A, 24, 43) for the recording medium (18) is essentially closed on at least three lateral sides and on the top and bottom sides ; guide and/or retaining rails (15, 37) are arranged on the bottom and/or lid part (13, 34) of the housing (10, 32) into which the protective holder (11, 11A, 24, 43) can be inserted, and from which it can be removed, when the housing (10, 32) is in the open state ; and, when the housing (10, 32) is closed, the guide means (16, 35) automatically make contact with said accessible section for operation of the recording medium (18) in the housing (10, 32).

2. A housing of a cassette as claimed in claim 1, wherein the bottom part (12, 33) and lid part (13, 34) are connected by hinges (14).

3. A housing as claimed in claim 2, wherein a part (42) of a locking means is provided on each of the guide/retaining rails (15, 37) and other parts (39, 40) are provided on the part of the housing not having the guide/retaining rails (15, 37), and actuating members (23) for the locking means are arranged on the housing and are accessible from outside.

4. A housing as claimed in claim 2 or 3, wherein the guide means in the vicinity of the openings (17, 26) for admitting the scanning means include elongated members (16, 35, 36) which extend essentially parallel to the guide/retaining rails (15, 37).

5. A housing as claimed in any of claims 2 to 4, wherein one of the narrow sides of the housing is provided with a flap (50) serving to close an opening for inserting/removing the protective holder (43).

6. A protective holder of a cassette as claimed in claim 1, consisting of a hollow member which, when viewed from above, has in its front wall at least one recess (17) which is essentially sealed off from the interior, and over which the section of recording medium is stretched, and in the region of which the scanning means and guide means can be brought into contact with the recording medium.

7. A protective holder as claimed in claim 6, wherein slot-shaped outlets for the section of recording medium are provided at the ends of the front wall in or near the outermost wall(s) of the recess(es), and guide means (20, 53 and 54) for the recording medium are arranged in the vicinity of the outlets.

8. A protective holder as claimed in claim 6, wherein guide slots (26) which cooperate with guide members (35, 36) on the housing (32) are arranged on transverse axes of the hollow member.

9. A protective holder as claimed in claim 6 or 8, wherein further guide slots (27), which enable the hollow member to be separated from the reel hubs, and extend from the front edge to the hubs, are arranged on transverse axes of the hollow member.

10. A protective holder as claimed in claim 8 or 9, wherein pins (30) for tensioning the recording medium are provided in the hollow member, which pins can be brought, by means of housing parts (36) passing through slots (26), into a position in which they do not effect tensioning of the recording medium.

**Revendications**

1. Cassette pour bande, formée d'un boîtier et d'une enveloppe de protection et de support pour au moins un rouleau de bande d'un support d'enregistrement à bande ou ruban, en particulier d'une bande magnétique, dans laquelle le boîtier (10, 32) est constitué de parties de fond et couvercle, à peu près rectangulaires, reproduisant la forme extérieure de la cassette, et pouvant s'ouvrir et se refermer, et comporte des ouvertures pour l'entrée des organes d'entraînement et de lecture, côté appareil, et pour l'amenée en prise des organes de lecture avec le support d'enregistrement (18) se trouvant dans le boîtier, enroulé au moins sur un rouleau de bande avec une boucle de bande, ainsi que des moyens de guidage (16, 35) du support d'enregistrement, le support d'enregistrement enroulé, avec sa bande, étant logé dans une enveloppe de protection et de support (11, 11a, 24, 43') qui possède des faces fond et couvercle, entre lesquelles est disposée une section de bande accessible qui peut être utilisée pour la marche de la cassette de bande dans le boîtier (10, 32), les organes d'entraînement et de lecture pouvant se rapprocher du support d'enregistrement ou pénétrer dans l'enveloppe de protection et de support, caractérisée par le fait que l'enveloppe de protection et de support (11, 11a, 24, 43) du support d'enregistrement (18) est formée de façon sensiblement continue d'au moins trois côtés de pourtour ainsi que de côtés fond et couvercle, que des rails de guidage et/ou de support (15, 27) sont prévus sur la partie fond et/ou la partie couvercle (13 et 34) du boîtier (10 ou 32), dans lequel l'enveloppe de protection et de support (11, 11a, 24, 43) peut être introduite quand le boîtier (10, 32), est ouvert ou en être extraite, et que, en fermant le boîtier (10, 32), les moyens de guidage (26, 35) se rapprochent automatiquement de la section de bande pour la marche du support d'enregistrement (18) dans le boîtier (10, 32).

2. Boîtier d'une cassette de bande selon la revendication 1, caractérisé par le fait qu'entre les parties fond et couvercle (12 et 13 ou 33 et 34) est prévu un assemblage articulé (14).

3. Boîtier selon la revendication 2, caractérisé par le fait que sur les rails de guidage et de support (15, 37), est prévue une partie (42) d'un moyen de verrouillage et une autre partie (39, 40) est prévue sur la partie du boîtier qui ne possède pas les rails de guidage et de support, et des éléments de manœuvre (23) de verrouillage sont disposés accessibles, à l'extérieur du boîtier.

4. Boîtier selon l'une des revendications 2 et 3, caractérisé par le fait que les moyens de guidage contiennent des nervures (16, 35, 36) disposées au voisinage des ouvertures d'entrée (17, 26) des organes de lecture, et qui s'étendent à peu près parallèlement aux rails de guidage et de support (15, 37).

5. Boîtier selon l'une des revendications 2 à 4, caractérisé par le fait que, sur un petit côté du boîtier, est prévu un volet servant à obturer une ouverture d'enlèvement de l'enveloppe de protection et de support (43).

6. Enveloppe de protection et de support d'une cassette de bande selon la revendication 1, caractérisée par le fait qu'elle est constituée d'un corps creux qui, sur le côté frontal, vue de dessus, comporte au moins un évidement (17), en principe fermé du côté intérieur, et sur lequel la section de bande est tendue et dans la zone duquel les organes de lecture peuvent être amenés au contact de la bande et les éléments de guidage en prise avec la bande.

7. Enveloppe de protection et support selon la revendication 6, caractérisée par le fait que des ouvertures de sortie, en forme de fentes, pour la section de bande, sont prévues aux extrémités de la face frontale dans ou au voisinage de la paroi la plus à l'extérieur de l'(des) évidement(s) et des éléments de guidage de bande (20, 53 et 54) sont disposés au voisinage des ouvertures de sortie.

8. Enveloppe de protection/support selon la revendication 6, caractérisée par le fait que des fentes de guidage (26) sont prévues le long de plans transversaux du corps creux, pour l'engagement d'éléments de guidage (35, 36) du boîtier (32).

9. Enveloppe de protection/support selon la revendication 6 ou 8, caractérisée par le fait que d'autres fentes de guidage (27) sont prévues le long de plans transversaux du corps creux, pour séparer le corps creux des noyaux de rouleaux, fentes qui s'étendent de la face frontale en direction des noyaux.

10. Enveloppe de protection/support selon la revendication 8 ou 9, caractérisée par le fait que des chevilles (30) de tension de bande sont prévues dans le corps creux et peuvent, grâce à des parties de boîtier (36) traversant des fentes (26), être amenées dans une position dans laquelle elles n'agissent pas sur la tension de bande.

0 031 927

FIG.1A

FIG.1B

FIG.1C

FIG.2A

FIG.2B

FIG.2C

# FIG.3

43

55  52

53
54  18

# FIG.3a